# EUROPEAN PATENT APPLICATION

(11) **EP 4 703 230 A1**
(43) Date of publication of application: **04.03.2026**
(21) Application number: 24201748.1
(22) Date of filing: 20.09.2024
(51) Int. Cl.: B61F 5/22, B61F 5/10, B61F 5/02

(54) **HEIGHT ADJUSTMENT METHOD FOR TRAIN BODY**

(30) Priority: 03.09.2024 CN 202411227347
(71) Applicant: Zhuzhou Times New Material Technology Co., Ltd, Zhuzhou, Hunan 412007 (CN)
(72) Inventor: Peng, Xuan, Zhuzhou, 412007 (CN); Dong, Xiaohong, Zhuzhou, 412007 (CN); Li, Wei, Zhuzhou, 412007 (CN); Ye, Te, Zhuzhou, 412007 (CN); Cheng, Haitao, Zhuzhou, 412007 (CN); Liu, Wensong, Zhuzhou, 412007 (CN); Zhou, Jun, Zhuzhou, 412007 (CN); Chen, Wenhai, Zhuzhou, 412007 (CN); Hu, Yujiang, Zhuzhou, 412007 (CN)
(74) Representative: Zhu, Junyi

(57) **Abstract**

a height adjustment method for a train body, comprising height adjustment steps after a train pulls in, specifically comprising the following steps: S1, determining an adjustment height ΔH which is: ΔH=H1-H2+H3, wherein H1 is a platform height, H2 is the design height of train floor, and H3 is an actual deviation between the actual height of the train floor and the design height after arriving at a station; S2, after the train arrives at the station, aerating/deflating air springs of a train bogie according to the adjustment height ΔH to make the train floor rise/fall by the adjustment height ΔH, so that the floor height of the train body is flush with the platform height. The adjustment height is determined according to the data characteristics of the train, which has strong adaptability, can eliminate the personality errors of different train models, and does not require additional hardware. At the same time, the determination of the height is forward-looking, and the height can be adjusted and determined in real time according to the actual operation of the train without the influence of external factors, such as lack of maintenance, of the train.

## Description

### Technical Field

The present invention relates to the technical field of electric control for railway vehicles, and particularly relates to a height adjustment method for a train body.

### Background

When a railway locomotive pulls in, there is a problem that a certain height difference exists between the floor height and a platform in some cases, which brings inconvenience to passengers in the process of getting on and off, thereby generating certain potential safety hazards. Due to certain differences in vehicle models and platform standard heights, it is difficult to adapt to different height differences caused by the above differences through a fixed height compensation system. Thus, a method or system which is strong in adaptability and capable of flexibly adjusting the floor height of the train as required is needed.

Through retrieval, the relevant technical literature of the vehicle height adjustment system or method in the prior art has been disclosed. For example, the publication document of the invention patent with the publication number of "CN114771595A" and the title of "a rapid adjustment system for small tilting of railway vehicles and a control method thereof" has been disclosed. An adjustment system for small tilting of railway vehicles and a control method are disclosed. The adjustment system comprises: an air cylinder, a left air spring, a right air spring, a middle height adjustment valve, a second left air valve, a third left air valve, a left height limiting valve, a second right air valve, a third right air valve and a right height limiting valve; the air cylinder is connected with the left air spring through the middle height adjustment valve and the second left air valve, and connected with the left air spring through the third left air valve, and is exhausted through the left height limiting valve; the air cylinder is connected with the right air spring through the middle height adjustment valve and the second right air valve, and connected with the right air spring through the third right air valve, and is exhausted through the right height limiting valve. The reference document uses the mechanical height adjustment valve to adjust the tilting of the vehicle body, which belongs to a passive adjustment system or method, different from adjustment of the height of the vehicle according to the actual demands.

For example, the authorization announcement document of the patent for utility model with the publication number of "CN219154471U" and the title of "a railway vehicle body height adjustment valve type mechanism, a control system and a railway vehicle" has been disclosed. A railway vehicle body height adjustment valve type mechanism, a control system and a railway vehicle are disclosed, specifically comprising a bogie, air springs, height detection devices, an inflation valve path and an exhaust valve path; wherein the air springs are arranged on both sides of the bogie; the height detection devices are arranged on both sides of the bogie and used for detecting the height of the vehicle body; the inflation valve path is connected with the air springs, and the inflation valve path is successively provided with a first proportional solenoid valve and a check valve in an inflation direction; the exhaust valve path is connected with the inflation valve path, and the connection is located between the check valve and the air springs; and the exhaust valve path is provided with a switch valve and a second proportional solenoid valve. The reference document can adjust the height of the vehicle as required, but does not provide an adjustment strategy for the height difference between the vehicle and the platform.

For example, the publication document of the invention patent with the publication number of "CN105034739A" and the title of "a control system for a commercial vehicle air suspension" has been disclosed. A control system for a commercial vehicle air suspension comprises a gas storage unit, a mechanical height valve, a switch solenoid valve, an electromagnetic pressure adjustment valve, a suspension air bag and a control handle. An air outlet of the electromagnetic pressure adjustment valve is connected with an air inlet of the suspension air bag; an air inlet and an air outlet of the switch solenoid valve are connected with an air outlet of the gas storage unit and the air inlet of the suspension air bag respectively; a normally open self-resetting deflation switch on the control handle is connected with an exhaust control end of the electromagnetic pressure adjustment valve; an air path switching positioning button switch on the control handle is connected with an air intake control end of the electromagnetic pressure adjustment valve; and a normally open self-resetting inflation switch on the control handle is connected with the air intake control end of the switch solenoid valve. The reference document is suitable for the height adjustment of an active suspension of a commercial vehicle, but not suitable for the height adjustment of train floor.

### Summary

In view of the defects of the prior art, the present invention provides a height adjustment method for a train body, comprising height adjustment steps after a train pulls in, specifically comprising the following steps:
S1, determining an adjustment height ΔH which is: ΔH=H1-H2+H3, wherein H1 is a platform height, H2 is the design height of train floor, and H3 is an actual deviation between the actual height of the train floor and the design height after arriving at a station;
S2, after the train arrives at the station, aerating/deflating air springs of a train bogie according to the adjustment height ΔH to make the train floor rise/fall by the adjustment height ΔH, so that the floor height of the train body is flush with the platform height.

Further, the actual deviation H3 between the actual height of the train floor and the design height after arriving at a station is determined jointly by a wheel wear height H4, primary spring deformation H5 after the train arrives at a station and height change H6 of the air springs after the train arrives at a station, specifically H3=H4+H5+H6+H7+H8.

Further, the wheel wear height H4= the wheel diameter DO of a new train - a current wheel diameter D1, and the current wheel diameter D1=V/(2*π*p), wherein V is speed and p is wheel speed.

Further, the primary spring deformation H5 is determined by the current load of the train and the load stiffness characteristic of a primary spring, and the height change H6 of the air springs is measured by height sensors built in the air springs.

In the above height adjustment method for the train body, a height adjustment system for the air springs is also used to adjust the height of the train body; the height adjustment system for the air springs comprises a control unit, an air source, and a pair of air springs; the air source and air bags of the air springs are connected through a first aerating/deflating path; the aerating/deflating path is also connected with a first solenoid valve; and height sensors are installed in the air springs.

In the step S2, after the control unit obtains the adjustment height ΔH, the first solenoid valve is opened, the air source is started, and the air bags of the air springs are aerated/deflated through the first aerating/deflating path; and after the change height of the air bags of the air springs reaches the adjustment height ΔH, the first solenoid valve is closed.

Further, the height adjustment system for the air springs further comprises a supplementary air source which is communicated with the air bags of the air springs through an auxiliary air path and a second solenoid valve; in the step S2, the control unit opens the supplementary air source and the second solenoid valve to aerate the air bags of the air springs.

Alternatively, the height sensors are coaxially installed on mandrels of the air springs, and detection ends are located inside the air bags; and air ducts of the air bags are arranged in deviation from mandrel axes.

Further, the height adjustment system for the air springs further comprises a mechanical ultrahigh limit valve, an input port of the mechanical ultrahigh limit valve is communicated with the air bags of the air springs, and an output port is communicated with the atmosphere.

Alternatively, the height adjustment system for the air springs further comprises a first mechanical height adjustment valve and a second mechanical height adjustment valve; an output port of the first mechanical height adjustment valve is communicated with the air bags of the air springs through a third solenoid valve; an input port is communicated with the air source through a second aerating/deflating path; an output port of the second mechanical height adjustment valve is communicated with the air bags of the air springs through a fourth solenoid valve, and an input port is communicated with the air source through the second aerating/deflating path; and in the step S2, the third solenoid valve and the fourth solenoid valve are closed.

The height adjustment method further comprises a height adjustment step S3 in train travel, specifically: opening the third solenoid valve and the fourth solenoid valve and closing the first solenoid valve and the second solenoid valve.

Alternatively, the first aerating/deflating path comprises an independent first left air path and a first right air path, and the first left air path is communicated with the air bag of the left air spring through a fifth solenoid valve; the first right air path is communicated with the air bag of the right air spring through a sixth solenoid valve; the auxiliary air path comprises an independent left auxiliary air path and a right auxiliary air path; the left auxiliary air path is communicated with the air bag of the left air spring through a seventh solenoid valve; the right auxiliary air path is communicated with the air bag of the right air spring through an eighth solenoid valve; the second aerating/deflating path comprises an independent second left air path and a second right air path; the second left air path is communicated with the air bag of the left air spring through an output port of the first mechanical height adjustment valve and the third solenoid valve; and the second right air path is communicated with the air bag of the right air spring through an output port of the second mechanical height adjustment valve and the fourth solenoid valve.

In the step S2, the fifth solenoid valve and/or the sixth solenoid valve are opened, the seventh solenoid valve and/or the eighth solenoid valve are opened, and the third solenoid valve and the fourth solenoid valve are closed; and in the step S3, the third solenoid valve and/or the fourth solenoid valve are opened, and the fifth solenoid valve to the eighth solenoid valve are closed.

Compared with the prior art, the technical solution of the present application has the following beneficial effects:
In the height adjustment method for the train provided by the present invention, the required adjustment height can be determined by using the data characteristics of the train, without the need for additional electrical modification to the platform. According to the actual height before the train pulls in, the height of the train is adjusted to be flush with the platform in time after the train pulls in to eliminate the height difference.

The adjustment height is determined according to the data characteristics of the train, which has strong adaptability, can eliminate the personality errors of different train models, and does not require additional hardware. At the same time, the determination of the height is forward-looking, and the height can be adjusted and determined in real time according to the actual operation of the train without the influence of external factors, such as lack of maintenance of the train.

The supplementary air source is additionally arranged. A secondary suspension component with large vertical stiffness such as a traction rod and a traction pile has great resistance when the train height is raised. The existing air source pressure cannot satisfy the requirement of large height increase of the air springs. By adding the supplementary air source for auxiliary aeration of the air springs, the train provided with the secondary suspension component such as the traction rod or the traction pile can smoothly achieve height adjustment.

### Description of Drawings

Fig. 1 is a schematic diagram of height adjustment after a train pulls in;
Fig. 2 is a structural schematic diagram of a train bogie;
Fig. 3 is a schematic diagram of a wheel wear height;
Fig. 4 is a schematic diagram of height of primary spring deformation;
Fig. 5 is a schematic diagram of height change of an air spring;
Fig. 6 is a principle diagram of a height adjustment system provided by an embodiment 1;
Fig. 7 is a principle diagram of a height adjustment system provided by an embodiment 2;
Fig. 8 is a principle diagram of a height adjustment system provided by an embodiment 3;

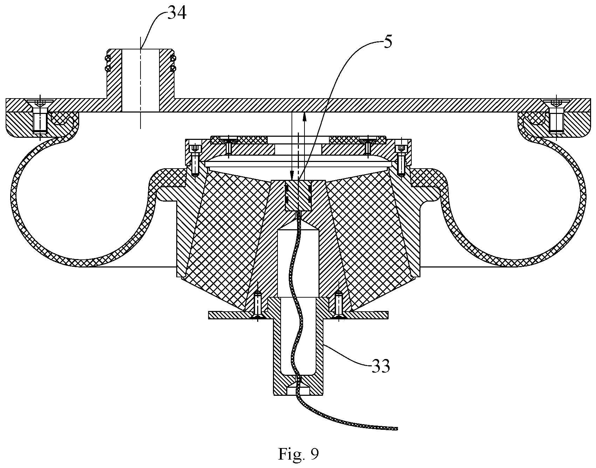

Fig. 9 is a schematic diagram of an installing structure of a height sensor in an air spring.

Reference Signs: 1 control unit; 2 air source; 3 air spring; 31 left air spring; 32 right air spring; 33 mandrel; 34 air duct; 4 supplementary air source; 5 height sensor; 6 first aerating/deflating path; 61 first left air path; 62 first right air path; 7 auxiliary air path; 71 left auxiliary air path; 72 right auxiliary air path; 8 second aerating/deflating path; 81 second left air path; 82 second right air path; V1 first solenoid valve; V2 second solenoid valve; K1 mechanical ultrahigh limit valve; K2 first mechanical height adjustment valve; K3 second mechanical height adjustment valve; V3 third solenoid valve; V4 fourth solenoid valve; V5 fifth solenoid valve; V6 sixth solenoid valve; V7 seventh solenoid valve; V8 eighth solenoid valve.

### Detailed Description

The technical solution in the embodiments of the present invention will be clearly and fully described below in combination with the drawings in the embodiments of the present invention. Apparently, the described embodiments are merely part of the embodiments of the present invention, not all of the embodiments. Based on the embodiments in the present invention, all other embodiments obtained by those ordinary skilled in the art without contributing creative labor will belong to the protection scope of the present invention.

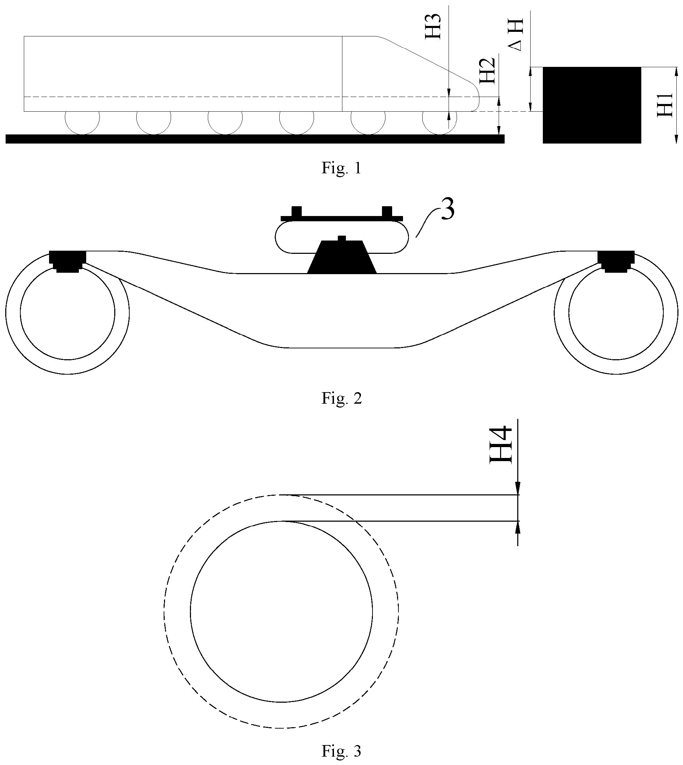

As shown in Fig. 1, a height adjustment method for a train body comprises height adjustment steps after a train pulls in, specifically comprising the following steps:
S1, determining an adjustment height ΔH which is: ΔH=H1-H2+H3, wherein H1 is a platform height, H2 is the design height of train floor, and H3 is an actual deviation between the actual height of the train floor and the design height after arriving at a station;
S2, after the train arrives at the station, aerating/deflating air springs 3 of a train bogie according to the adjustment height ΔH to make the train floor rise/fall by the adjustment height ΔH, so that the floor height of the train body is flush with the platform height.

In the present embodiment, the platform height H1 can be obtained by a GPS signal. The design height H2 of train floor is a standard value which is known when each train is dispatched from the factory. The actual deviation height H3 is changed due to actual factors such as train load and wheel wear. The adjustment height is determined according to the data characteristics of the train, which has strong adaptability, can eliminate the personality errors of different train models, and does not require additional hardware. At the same time, the determination of the height is forward-looking, and the height can be adjusted and determined in real time according to the actual operation of the train without the influence of external factors, such as lack of maintenance, of the train. In the applicable scenario of different trains and different actual platform heights, it is only necessary to correct the train data parameters, and the parameter features can also be directly determined through the train models, so the adaptability is strong.

As shown in Fig. 2 to Fig. 5, in a more preferred embodiment, the actual deviation H3 between the actual height of the train floor and the design height after arriving at a station is determined jointly by a wheel wear height H4, primary spring deformation H5 after the train arrives at a station, height change H6 of the air springs 3 after the train arrives at a station, primary spring creep H7 and primary spring deformation temperature compensation H8, specifically H3=H4+H5+H6+H7+H8. In the actual operation process of the train, the height of the primary spring is changed because of the train load, and the wheel height is also changed because of wear after operating for a period of time. In a secondary spring, the heights of the air springs 3 are also changed because of the train load. The sum of the above height change determines the actual deviation between the actual height of the train and the design height. Through the determination of the above parameters, it can be known that the height change, such as the primary spring deformation H5 and the wheel wear height H4 can be determined by the calculation of the operating parameters or characteristic parameters of the train without the need for an additional detection device. The height change H6 of the air springs 3 is measured by the built-in height sensors 5, and meanwhile, the height change obtained by the height sensors 5 is also used as a feedback value in the process of height adjustment. The primary spring creep H7=a*ln(x)+b, wherein a is a creep coefficient, which is obtained according to the material properties, stress levels and temperature tests of samples to be tested; b is initial strain, which represents reference strain at the beginning of creep; and x is the operation time of a product. The primary spring deformation temperature compensation H8 is a height difference between the deformation of the primary spring at the current platform temperature and the deformation at 23°C.

In a more preferred embodiment, the wheel wear height H4= the wheel diameter DO of a new train - a current wheel diameter D1, and the current wheel diameter D1=V/(2*π*p), wherein V is train speed and p is wheel speed. Wherein the wheel diameter DO of the new train is known when dispatching from the factory; the current wheel diameter D1 can be calculated by a relationship between the train speed and the wheel speed; and the train speed and the wheel speed can be obtained through the operation data of the train, without the need to add other detection devices. In some prior arts, the wheel wear height is expected to be obtained by obtaining the number of compensation pads added in each maintenance, which has certain hysteresis. When the train is not maintained in time and the compensation pads are not added, the wheel wear height will bring a certain error, which affects the overall accuracy of height adjustment.

In a more preferred embodiment, the primary spring deformation H5 is determined by the current load of the train and the load stiffness characteristic of a primary spring, and the height change H6 of the air springs 3 is measured by height sensors 5 built in the air springs 3. The primary spring deformation H5 can be calculated by the relationship between the stiffness of the primary spring and the load, and the train load and the stiffness of the primary spring can also be obtained from the operation data of the train and the own characteristic parameters of the train. The built-in height sensors 5 of the air springs 3 can directly measure the height change generated by the pressure on the air bags of the air springs 3, and the height collection is more direct and accurate.

In a more preferred embodiment, a height adjustment system for the air springs 3 is used. The height adjustment system for the air springs 3 comprises a control unit 1, an air source 2, and a pair of air springs 3; the air source 2 and air bags of the air springs 3 are connected through a first aerating/deflating path 6; the aerating/deflating path is also connected with a first solenoid valve V1; and height sensors 5 are installed in the air springs 3.

In the step S2, after the control unit 1 obtains the adjustment height ΔH, the first solenoid valve V1 is opened, the air source 2 is started, and the air bags of the air springs 3 are aerated/deflated through the first aerating/deflating path 6; and after the change height of the air bags of the air springs 3 reaches the adjustment height ΔH, the first solenoid valve V1 is closed.

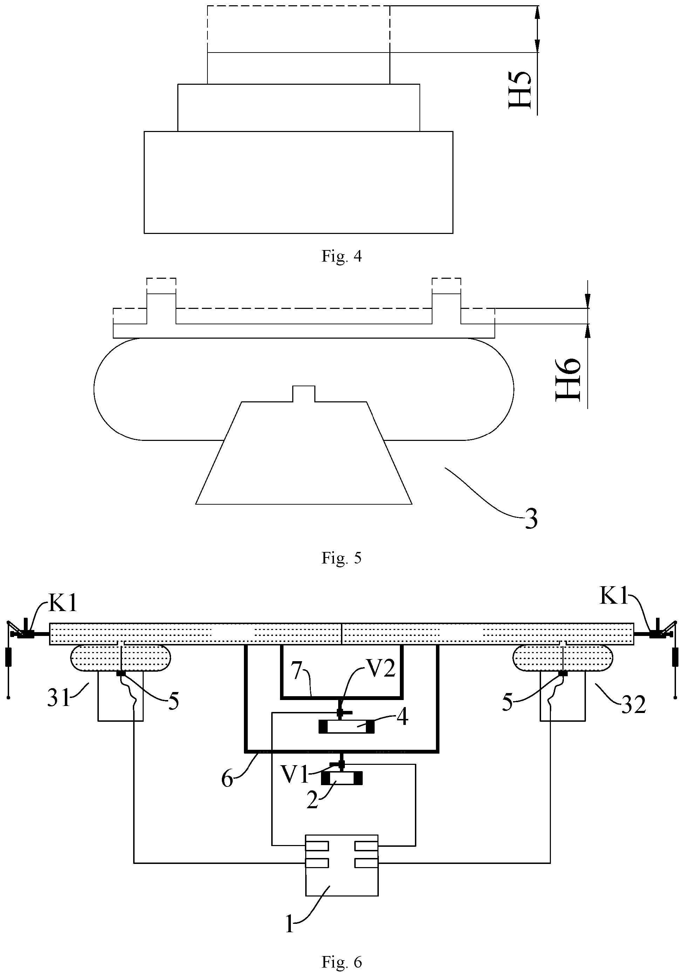

The details are provided in embodiment 1, as shown in Fig. 6.

The height of the train can be adjusted and changed through aeration/deflation of the air springs 3. Combined with the determination of the above adjustment height ΔH, the height sensors 5 installed in the air springs 3 can be used for height feedback, which can adjust the height of the train floor to be flush with the platform height at high accuracy. The first solenoid valve V1 is only opened when the height is raised during pulling in, and is closed after the height is adjusted, and the first solenoid valve V1 is also closed during the operation of the train to decreasing consumption of air source 2.

In a more preferred embodiment, the height adjustment system for the air springs further comprises a supplementary air source 2 which is communicated with the air bags of the air springs 3 through an auxiliary air path 7 and a second solenoid valve V2; in the step S2, the control unit 1 opens the supplementary air source 2 and the second solenoid valve V2 to aerate the air bags of the air springs 3. The supplementary air source 2 is designed because if the secondary suspension uses a traction rod, after the height of the train is adjusted to a certain extent, the traction rod has an opposite lifting resistance to the lifting of the train. Thus, more gas needs to be filled into the air bags to lift the train. With the increase of the lifting height, a lifting force is also increased in a non-linear way, and a relationship between the lifting resistance F_{z} of the traction rod and the lifting height is: F_{z}=Kᵣ*((L_{b}²+h_{z}²)-L_{b})*arctan(h_{z}/L_{b}), wherein Kᵣ is the radial stiffness of spherical hinges of the traction rod, L_{b} is a center distance between the two spherical hinges of the traction rod, and h_{z} is the lifting height. Therefore, after the lifting height of the train is calculated, the lifting force required to lift the train floor to a corresponding height is the sum of the lifting resistance and the weight of the train body, and then the aerating air pressure of the air springs is calculated according to the lifting force and the effective area of the air springs, so as to lift the train floor to an accurate height. If the traction rod is used in the system, a train air supply system needs to add the supplementary air source 2 or increase the air supply pressure of an air compressor to satisfy the demand for air supply pressure of the air springs 3 during lifting.

In a more preferred embodiment, the height sensors 5 are coaxially installed on mandrels 33 of the air springs 3, and detection ends are located inside the air bags; and air ducts 34 of the air bags are arranged in deviation from axes of the mandrels 33. In the present embodiment, the air bags and the external air paths are communicated by additional air chambers. The air ducts 34 of the air bags are also communicated with the additional air chambers. The height sensors 5 are coaxially installed on the mandrels 33 of the air springs 3, and meanwhile, sealing rings are used for sealing processing. The air ducts 34 of the air bags are arranged in deviation from axes of the mandrels 33 so that the detection ends of the height sensors 5 can directly detect the height change of cover plates on the air springs and the measurement is more accurate. The height sensors 5 preferably use ultrasonic sensors, and the maximum withstand voltage reaches 1 Mpa, so that high pressure inside the air bags can be withstood. The height sensors 5 are provided with sealing grooves for preventing the sealing rings. The sealing with auxiliary spring spindles can be achieved through the own sealing rings so that good sealing performance and reliability are achieved. The height sensors 5 are preferably ultrasonic sensors with a small measurement blind area, and the small measurement blind area does not need to reserve too much measurement blind area space for the sensors, which can be more conducive to the arrangement of the height sensors 5 in the air springs.

In a more preferred embodiment, the height adjustment system for the air springs further comprises a mechanical ultrahigh limit valve K1, an input port of the mechanical ultrahigh limit valve is communicated with the air bags of the air springs 3, and an output port is communicated with the atmosphere. The mechanical ultrahigh limit valve K1 has the same principle as the mechanical height adjustment valve of the prior art. Valve cores are driven by connecting rods, and the connecting rods are connected with the train body to receive the height change of the train body and drive the valve cores to act. When the height of the train body is too high, the mechanical ultrahigh limit valve K1 is opened to exhaust the air inside the air bags. After the height returns to normal, the connecting rods act to drive the valve cores to close the mechanical ultrahigh limit valve K1 so that the air bags stop the exhaust, thereby preventing the height of the train from being too high during operation or height adjustment.

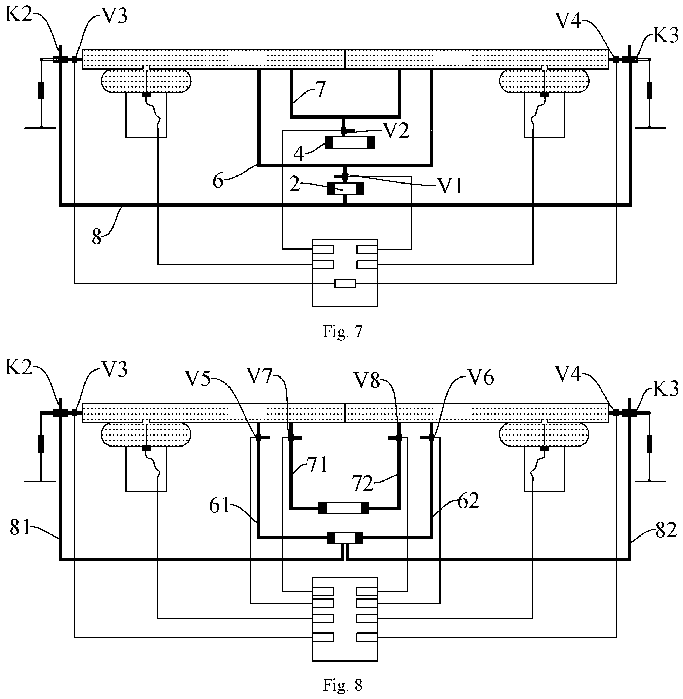

Embodiment 2: as shown in Fig. 7.

The height adjustment system for the air springs further comprises a first mechanical height adjustment valve K2 and a second mechanical height adjustment valve K3; an output port of the first mechanical height adjustment valve K2 is communicated with the air bags of the air springs 3 through a third solenoid valve V3; an input port is communicated with the air source 2 through a second aerating/deflating path 8; an output port of the second mechanical height adjustment valve K3 is communicated with the air bags of the air springs 3 through a fourth solenoid valve V4, and an input port is communicated with the air source 2 through the second aerating/deflating path 8; and in the step S2, the third solenoid valve V3 and the fourth solenoid valve V4 are closed.

The height adjustment method further comprises a height adjustment step S3 in train travel, specifically: opening the third solenoid valve V3 and the fourth solenoid valve V4 and closing the first solenoid valve V1 and the second solenoid valve V2.

The difference between the present embodiment and embodiment 1 is that the first mechanical height adjustment valve K2 and the second mechanical height adjustment valve K3 are used to conduct a passive adjustment of the height of the train. The mechanical operation principle is consistent with that of the mechanical ultrahigh limit valve K1, but the air source 2 is connected. Therefore, during the operation of the train, when the height of the train is low, the first mechanical height adjustment valve K2 and the second mechanical height adjustment valve K3 are opened. At this moment, the air source 2 can aerate the air bags of the air springs 3. At this moment, the first solenoid valve V1 and the second solenoid valve V2 for active adjustment should be closed. In the step S2 of height adjustment in the station, the third solenoid valve V3 and the fourth solenoid valve V4 should be closed, and the first solenoid valve V1 and the second solenoid valve V2 should be opened to prevent the first mechanical height adjustment valve K2 and the second mechanical height adjustment valve K3 from being opened and aerating the air bags.

Embodiment 3: as shown in Fig. 8. The present embodiment is different from embodiment 2 in that the air springs 3 on the left and right sides can be aerated and deflated independently to adjust the height.

The first aerating/deflating path 6 comprises an independent first left air path 61 and a first right air path 62, and the first left air path 61 is communicated with the air bag of the left air spring 31 through a fifth solenoid valve V5; the first right air path 62 is communicated with the air bag of the right air spring 32 through a sixth solenoid valve V6; the auxiliary air path 7 comprises an independent left auxiliary air path 71 and a right auxiliary air path 72; the left auxiliary air path 71 is communicated with the air bag of the left air spring 31 through a seventh solenoid valve V7; the right auxiliary air path 72 is communicated with the air bag of the right air spring 32 through an eighth solenoid valve; the second aerating/deflating path 8 comprises an independent second left air path 81 and a second right air path 82; the second left air path 81 is communicated with the air bag of the left air spring 31 through an output port of the first mechanical height adjustment valve K2 and the third solenoid valve V3; and the second right air path 82 is communicated with the air bag of the right air spring 32 through an output port of the second mechanical height adjustment valve K3 and the fourth solenoid valve V4.

In the step S2, the fifth solenoid valve V5 and/or the sixth solenoid valve V6 are opened, the seventh solenoid valve V7 and/or the eighth solenoid valve are opened, and the third solenoid valve V3 and the fourth solenoid valve V4 are closed; and in the step S3, the third solenoid valve V3 and/or the fourth solenoid valve V4 are opened, and the fifth solenoid valve V5 to the eighth solenoid valve are closed.

It should be noted that herein, relationship terms of first, second and the like herein are just used for differentiating one entity or operation from the other entity or operation, and do not necessarily require or imply any practical relationship or sequence between the entities or operations. Moreover, terms of "comprise", "include" or any other variant are intended to cover non-exclusive inclusion, so that a process, a method, an article or a device which includes a series of elements not only includes such elements, but also includes other elements not listed clearly or also includes inherent elements in the process, the method, the article or the device. Under the condition of no more limitation, the elements defined by a sentence "include one..." do not exclude additional identical elements in the process, the method, the article or the terminal device which includes the elements.

Although the embodiments of the present invention have been shown and described, it will be appreciated that various variations, amendments, replacements and modifications can be made by those ordinary skilled in the art without departing from the principle and spirit of the present invention, and the scope of the present invention is limited by the appended claims and the equivalents thereof.

## Claims

1. A height adjustment method for a train body, comprising height adjustment steps after a train pulls in, **characterized in that**: specifically comprising the following steps:
S1, determining an adjustment height ΔH which is: ΔH=H1-H2+H3, wherein H1 is a platform height, H2 is the design height of train floor, and H3 is an actual deviation between the actual height of the train floor and the design height after arriving at a station;
S2, after the train arrives at the station, aerating/deflating air springs (3) of a train bogie according to the adjustment height ΔH to make the train floor rise/fall by the adjustment height ΔH, so that the floor height of the train body is flush with the platform height;
the actual deviation H3 between the actual height of the train floor and the design height after arriving at a station is determined jointly by a wheel wear height H4, primary spring deformation H5 after the train arrives at a station and height change H6 of the air springs (3) after the train arrives at a station, specifically H3=H4+H5+H6+H7+H8;
the wheel wear height H4= the wheel diameter DO of a new train - a current wheel diameter D1, and the current wheel diameter D1=V/(2*π*p), wherein V is speed and p is wheel speed.

2. The height adjustment method for a train body according to claim 1, **characterized in that**: the primary spring deformation H5 is determined by the current load of the train and the load stiffness characteristic of a primary spring, and the height change H6 of the air springs (3) is measured by height sensors (5) built in the air springs (3); the primary spring creep H7=a*ln(x)+b, wherein a is a creep coefficient, b is initial strain, x is the operation time of a product; and the primary spring deformation temperature compensation H8 is a height difference between the deformation of the primary spring at the current platform temperature and the deformation at 23°C.

3. The height adjustment method for a train body according to claim 1 or 2, **characterized in that**: a height adjustment system for the air springs (3) is used to adjust the height of the train body; the height adjustment system comprises a control unit (1), an air source (2), and a pair of air springs (3); the air source (2) and air bags of the air springs (3) are connected through a first aerating/deflating path (6); the aerating/deflating path is also connected with a first solenoid valve (V1); and height sensors (5) are installed in the air springs (3).

4. The height adjustment method for a train body according to claim 3, **characterized in that**: in the step S2, after the control unit (1) obtains the adjustment height ΔH, the first solenoid valve (V1) is opened, the air source (2) is started, and the air bags of the air springs (3) are aerated/deflated through the first aerating/deflating path (6); and after the height of the air bags of the air springs (3) reaches the adjustment height ΔH, the first solenoid valve (V1) is closed.

5. The height adjustment method for a train body according to claim 3, **characterized in that**: the height adjustment system for the air springs (3) further comprises a supplementary air source (2) which is communicated with the air bags of the air springs (3) through an auxiliary air path (7) and a second solenoid valve (V2); in the step S2, the control unit (1) opens the supplementary air source (2) and the second solenoid valve (V2) to aerate the air bags of the air springs (3).

6. The height adjustment method for a train body according to claim 5, **characterized in that**: if the secondary suspension uses a traction rod, the traction rod has an opposite lifting resistance F_{z} to the lifting of the train, and a relationship between F_{z} and the lifting height is: F_{z}=Kᵣ*((L_{b}²+h_{z}²)-L_{b})*arctan(h_{z}/L_{b}), wherein Kᵣ is the radial stiffness of spherical hinges of the traction rod, L_{b} is a center distance between the two spherical hinges of the traction rod, and h_{z} is the lifting height.

7. The height adjustment method for a train body according to claim 1, **characterized in that**: the height sensors (5) are coaxially installed on mandrels (33) of the air springs (3), and detection ends are located inside the air bags; and air ducts (34) of the air bags are arranged in deviation from mandrel (33) axes.

8. The height adjustment method for a train body according to claim 5, **characterized in that**: the height adjustment system for the air springs (3) further comprises a mechanical ultrahigh limit valve (K1), an input port of the mechanical ultrahigh limit valve (K1) is communicated with the air bags of the air springs (3), and an output port is communicated with the atmosphere.

9. The height adjustment method for a train body according to claim 5, **characterized in that**: the height adjustment system for the air springs (3) further comprises a first mechanical height adjustment valve (K2) and a second mechanical height adjustment valve (K3); an output port of the first mechanical height adjustment valve (K2) is communicated with the air bags of the air springs (3) through a third solenoid valve (V3); an input port of the first mechanical height adjustment valve (K2) is communicated with the air source (3) through a second aerating/deflating path (8); an output port of the second mechanical height adjustment valve (K3) is communicated with the air bags of the air springs (3) through a fourth solenoid valve (V4), and an input port of the second mechanical height adjustment valve (K3) is communicated with the air source (2) through the second aerating/deflating path(8); and in the step S2, the third solenoid valve (V3) and the fourth solenoid valve (V4) are closed.

10. The height adjustment method for a train body according to claim 9, **characterized in that**: the height adjustment method further comprises a height adjustment step S3 in train travel: opening the third solenoid valve (V3) and the fourth solenoid valve (V4) and closing the first solenoid valve (V1) and the second solenoid valve (V2).

11. The height adjustment method for a train body according to claim 5, **characterized in that**: the first aerating/deflating path (6) comprises an independent first left air path (61) and a first right air path (62), and the first left air path (61) is communicated with the air bag of the left air spring (31) through a fifth solenoid valve (V5); the first right air path (62) is communicated with the air bag of the right air spring (32) through a sixth solenoid valve (V6); the auxiliary air path (7) comprises an independent left auxiliary air path (71) and a right auxiliary air path (72); the left auxiliary air path (71) is communicated with the air bag of the left air spring (31) through a seventh solenoid valve (V7); the right auxiliary air path (72) is communicated with the air bag of the right air spring (32) through an eighth solenoid valve; the second aerating/deflating path (8) comprises an independent second left air path (81) and a second right air path (82); the second left air path (81) is communicated with the air bag of the left air spring (31) through an output port of the first mechanical height adjustment valve (K2) and the third solenoid valve (V3); and the second right air path (82) is communicated with the air bag of the right air spring (32) through an output port of the second mechanical height adjustment valve (K3) and the fourth solenoid valve (V4).

12. The height adjustment method for a train body according to claim 11, **characterized in that**: in the step S2, the fifth solenoid valve (V5) and/or the sixth solenoid valve (V6) are opened, the seventh solenoid valve (V7) and/or the eighth solenoid valve are opened, and the third solenoid valve (V3) and the fourth solenoid valve (V4) are closed.

13. The height adjustment method for a train body according to claim 12, **characterized in that**: the height adjustment method further comprises a height adjustment step S3 in train travel: the third solenoid valve (V3) and/or the fourth solenoid valve (V4) are opened, and the fifth solenoid valve (V5) to the eighth solenoid valve are closed.
